# EUROPEAN PATENT SPECIFICATION

(11) **EP 0 488 489 B1**
(45) Date of publication and mention of the grant of the patent: **28.02.1996**
(21) Application number: 91302239.8
(22) Date of filing: 15.03.1991
(51) Int. Cl.: C08F 220/22, C03C 25/02, G02B 6/00

(54) **Cladding material for optical fiber and method for its manufacture**
Ummantelndes Material für eine optische Faser und Verfahren zu seiner Herstellung
Matériau de revêtement pour une fibre optique et procédé pour sa préparation

(30) Priority: 30.11.1990 JP 339737/90
(43) Date of publication of application: 03.06.1992
(73) Proprietor: TORAY INDUSTRIES, INC., Tokyo 103 (JP)
(72) Inventor: Matsunaga, Tadayo, Otsu-shi, Shiga-ken (JP); Suganuma, Heiroku, Otsu-shi, Shiga-ken, 520 (JP); Fukuda, Tadanori, Otsu-shi, Shiga-ken, 520 (JP); Nakamura, Genzaburo, Kanzaki-gun, Shiga-ken 529-14 (JP)
(74) Representative: Coleiro, Raymond

(56) References cited:
- Chemical Abstracts, vol 105, no 2, July 14 1986. Toyoshima et al. "Copolymers for optical fiber sheats", pages 52-53, abstract no 7 572h & JP-A-60 235 817
- Chemical Abstracts, vol 105, no 10, September 8 1986, Nakai et al. 'Optical Fibers' page 66, abstract no 80 283u & JP-A-61 77 806
- Chemical Abstracts, vol 105, no 22, December 1 1986, Sasaki et al. 'Optical Fibers', page 65 abstract no 191 481p & JP-A-61 121 005

## Description

This invention relates to a cladding material with low refractive index and high thermal stability, being useful for a cladding component of a plastic optical fiber.

Optical fibers are composed of a core, within which light travels, and a cladding, which sheathes the core. In order to confine the light to the core, the refractive index of the cladding has to be lower than that of the core, and the larger the difference in refractive index between the core and the cladding, the more light can be accepted from the end of the optical fiber.

So an optical fiber employing a polymer with low refractive index as a cladding material is favorable for accepting much light. Usually, the light acceptance from the fiber end is expressed as the value of the acceptance angle, which is calculated from the refractive indexes of core and cladding.

As a core material, quartz glass and a highly transparent plastic such as polymethyl methacrylate are usually employed.

On the other hand, various fluorine-containing polymers are generally used as a cladding material, because of their low refractive indices.

For example, fluoroethylene/fluoropropylene copolymer is known as a cladding material when the core material is quartz glass [Applied Optic 14, 156 (1975)].

For cladding a core material such as polymethyl methacrylate it is known to use a vinylidene fluoride/tetrafluoroethylene copolymer (JP-B-63-67164), and a hexafluoroacetone/vinylidene fluoride copolymer (JP-A-61-22305).

These fluorine-containing polymers are inferior in transparency because of their crystallinity, although they are excellent in mechanical strength, thermal stability and chemical resistance. As the temperature of these polymers is raised, the crystallization proceeds to lower their transparency, even if they have good transparency at room temperature (which can be obtained by quick cooling just after molding or by solvent casting). This is a serious problem because poor transparency of the cladding component leads to decrease of light transmittance of the optical fiber.

For example, an optical fiber employing vinylidene fluoride/tetrafluoroethylene copolymer as the cladding material and polymethyl methacrylate as the core material must be used at a temperature of at most 70°C, owing to the tendency to cause crystallization of the cladding.

These fluoroolefin polymers, therefore, are not satisfactory for the cladding material.

On the other hand, to obtain a cladding material with improved high transparency, various fluoroalkyl methacrylate polymers are employed. The following polymers are proposed as a cladding material when the core material is polymethyl methacrylate: copolymers of methacrylates or acrylates with linear fluoroalkyl groups and methyl methacrylate (JP-B-43-8978); terpolymers of methacrylate with a long fluoroalkyl group (40-70 wt.%), methacrylates with a short fluoroalkyl group (20-50 wt.%), and methyl methacrylate (5-20wt.%) (JP-A-62-265606).

However, these methacrylate polymers have the disadvantage that they are easily decomposed by heat. During their melt molding, decrease of their viscosity and gas generation usually occur. Hence, it is difficult to produce optical fibers when fluoroalkyl methacrylate polymers are employed as a cladding material.

In particular, during thermal decomposition of the fluoroalkyl methacrylate polymers, depolymerization (i.e., unzipping of the polymer chain) has been found to occur. The longer the fluoroalkyl group is, the more easily depolymerization of the polymer tends to proceed. Therefore, it is important to suppress the depolymerization of the fluoroalkyl methacrylate polymers, especially those with a long fluoroalkyl group, while maintaining their excellent characteristics when used as a cladding material.

As a method of suppressing thermal decomposition of the fluoroalkyl methacrylate polymers, the following methods are known so far:
(1) o-methyl phenyl maleimide is copolymerized with the fluoroalkyl methacrylates (JP-A-60-235817).
(2) fluoroalkyl acrylates are copolymerized with the fluoroalkyl methacrylates (JP-A-64-79704).

Although the copolymer can be improved by method (1) in that thermal decomposition is reduced, it is colored due to the presence of the phenyl group of the o-methyl phenyl maleimide. In addition, introduction of o-methyl phenyl maleimide units leads to an increase of the refractive index of the polymer, which is undesirable for the cladding material. Therefore, the copolymer obtained by the method (1) is unsuitable for cladding material by reason of color and increased refractive index.

The method (2) can also suppress thermal decomposition of the copolymer to some extent, but the thermal deformation temperature of the copolymer is decreased because of the copolymerization with poly(fluoroalkyl acrylates), which have a low glass transition temperature. Because of this decrease in glass transition temperature, the copolymer obtained by the method (2) is unsuitable for cladding material.

The present invention provides a cladding material which may have all of the following properties, namely low refractive index, high thermal stability, and high glass transition temperature.

The present invention also provides a cladding material useful for optical fibers with a large acceptance angle.

In particular, the invention provides, according to one aspect, a cladding material comprising, preferably at least mainly, and more preferably substantially entirely, a copolymer which comprises from 30 to 0.2 wt.% inclusive of an N-aliphatic maleimide and from 70 to 99.8 wt.% inclusive of a fluoroalkyl methacrylate having 8-21 fluorine atoms as monomer units.

According to another aspect, the invention provides a method for producing a cladding material, wherein the copolymer used for said cladding material is obtained by the continuous steps of copolymerizing monomers comprising from 70 to 99.8 wt.% inclusive of a fluoroalkyl methacrylate having 8-21 fluorine atoms and from 30 to 0.2 wt.% inclusive of an N-aliphatic maleimide in the presence of 10 - 40 wt.% of a solvent based on the total amount of the polymerization mixture; and evaporating volatile compounds consisting essentially of unreacted monomers and solvent from the produced polymer.

By copolymerizing even a small amount of N-aliphatic maleimide, with the fluoroalkyl methacrylate, the thermal stability of the obtained copolymer is considerably improved without the virtual increase of refractive index and decrease of glass transition temperature of the polymer.

The invention involves the use of an N-aliphatic maleimide, preferably in a small amount, with a fluoroalkyl methacrylate as a monomer unit of the main polymer of cladding material.

In the course of our study to improve thermal stability of fluoroalkyl methacrylate polymers, it has been revealed surprisingly that copolymerization with N-aliphatic maleimide is very effective in suppressing the depolymerization, while maintaining their excellent characteristics as cladding materials for optical fiber.

On the other hand, as a core material, it is known that N-aliphatic maleimide is employed as a monomer component with methylmethacrylate and/or styrene, in order to increase its glass transition temperature and heat stability (US-A-4810055). However, employment of maleimide to improve cladding material was not studied presumably because the presence of maleimide tended to increase the refractive index of the polymer.

N-aliphatic maleimides employed in this invention are represented by the following general formula: 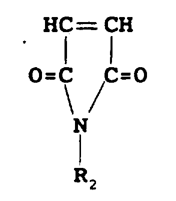 wherein R₂ is an aliphatic group, which may be a straight or branched chain group or which may be or contain a cyclic group. The aliphatic group may contain fluorine(s) substituted therein.

Among the N-aliphatic maleimides, maleimides substituted with aliphatic hydrocarbon or aliphatic fluorocarbon are preferred in view of the refractive index of the polymer for cladding. Moreover, N-aliphatic maleimides with no characteristic absorption in the visible light region are preferred, considering the light transmittance of the optical fiber. Further, having regard to the balance of the combination of the mechanical characteristics of the polymer, glass transition-raising property and heat stability, the N-aliphatic maleimide has, preferably, an aliphatic group with 1 to 16, more preferably 1 to 6, carbon atoms. The aliphatic group may be, for example, methyl, ethyl, propyl, isopropyl, butyl, isobutyl, secondary-butyl, tertiary-butyl, 2,2-dimethylpropyl, hexyl, cyclohexyl, trifluoromethyl, trifluoroethyl, tetrafluoropropyl or hexafluoropropyl. Further, having regard to the feasibility of distillation to improve the purity of the monomer, aliphatic groups such as isopropyl, isobutyl, secondary-butyl, tertiary-butyl or 2,2-dimethylpropyl, which are liquid at room temperature, are especially preferred.

Among N-substituted maleimides, maleimides substituted with an aryl group have a high refractive index and are colored, and so they are not suitable for a cladding material for optical fibers.

The N-aliphatic maleimide content in the copolymer for cladding is 0.2 - 30 wt.%. Preferably, the amount of N-aliphatic maleimide is 1 - 20 wt.%. If the amount of N-aliphatic maleimide is lower than 0.2 wt.%, enough improvement on thermal stability cannot be attained. If the amount is higher than 30 wt.%, the copolymer becomes unsuitable for cladding material because mechanical properties such as flexibility and transparency of the copolymer are lowered.

With regard to the fluoroalkyl methacrylate, its fluorine content is important to obtain a low refractive index polymer. The higher the fluorine content of the polymer, the lower its refractive index. The fluorine content of the fluoroalkyl methacrylate can easily be varied by controlling the number of fluorine atoms in its fluoroalkyl group.

However, too long a fluoroalkyl group leads to decrease in the glass transition temperature of the polymer, and also leads to decrease in the transparency of the polymer, probably because of the crystallization of the long fluoroalkyl group.

Having regard to the above, the number of fluorine atoms in the fluoroalkyl group is 8 - 21. If the number of fluorine atoms in the fluoroalkyl group is lower than 8, a sufficiently low refractive index of the polymer may not be attained. If the number of fluorine atoms of the fluoroalkyl group is higher than 21, it is difficult to keep both the glass transition temperature and transparency of the polymer sufficiently high.

Fluoroalkyl methacrylates employed in a cladding material according to this invention are preferably represented by the following general formula: 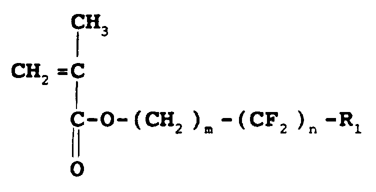 wherein R₁ is H or F; m is 1 or 2; n is from 4 to 10 inclusive.

The fluoroalkyl methacrylate content in the copolymer for cladding is 70 - 99.8 wt.%. Preferably, the amount of fluoroalkyl methacrylate is 80 - 99 wt.%.

The copolymer for the cladding material may additionally comprise a further component as a monomer unit, together with the N-aliphatic maleimide and fluoroalkyl methacrylate. The most preferred further component is methyl methacrylate.

Copolymerization of methyl methacrylate can endow the polymer with flexibility and affinity to the core, while allowing the polymer to retain its low refractive index and high thermal stability. In this respect, the preferred amount of methyl methacrylate is 10 - 29.8 wt.%. When the methyl methacrylate is employed as a further component, the fluoroalkyl methacrylate content and N-aliphatic maleimide content are preferably 70-89.8 wt.% and 20 - 0.2 wt.%, respectively.

However, the invention is not restricted thereto and any comonomer may be used as long as it has a copolymerization compatibility with the N-aliphatic maleimide and fluoroalkyl methacrylate. Further, adding a trace amount of heat stabilizer and/or antioxidant, which does not adversely affect the light transmittance, is also included within the scope of the present invention.

As regards the polymerization method, bulk polymerization, suspension polymerization, emulsion polymerization or solution polymerization may be employed. Among these methods, bulk polymerization and solution polymerization are preferable, considering the transparency of the obtained copolymer.

Examples of the solvent for solution polymerization include fluorine-containing solvents such as 1,1,2-trichloro-1,2,2-trifluoroethane, 1,1,2,2-tetrachloro-1,1-difluoroethane, (trifluoromethyl)benzene and 1,3-bis(trifluoromethyl)benzene; and chlorine containing solvents such as 1,1,2,2-tetrachloroethane. The solvent is not restricted to these compounds and any solvent which is inactive against the polymerization reaction and which can dissolve the monomers and the polymer may be used.

Ordinary polymerization initiators, for example, azo compounds such as azobisisobutyronitrile, azo-t-butane and azo-t-octane, or organic peroxides such as di-t-butylperoxide and di-t-butylbenzoate are preferably used.

As molecular weight controlling agents, mercaptans such as n-propyl, n-butyl, n-hexyl, n-dodecyl, i-butyl, i-pentyl, and t-butyl mercaptan can be used.

For uniform quality of the obtained polymer, continuous polymerization is better, but, of course, batch polymerization can be applied. The polymer mixture thus obtained is subjected to a monomer-elimination step to remove volatiles such as unreacted monomers and solvent.

The obtained copolymer may be supplied to the cladding material, either alone or in a blend with additives, provided that the blend contains an amount of copolymer sufficient for it to substantially retain its good properties. As the additives, a stabilizer and/or an antioxidant may be used.

Thereafter, the cladding material and core material may be fed separately to a composite spinning machine with a core-cladding type spinneret to obtain a core-cladding structure, which may then be co-spun and drawn in the usual way to form an optical fiber having a core-cladding structure.

As core material of the optical fibers any of the polymers which are used conventionally as a core material of the plastic optical fiber may be employed. However, polymers comprising methyl methacrylate are preferred. The polymer may contain an N-aliphatic maleimide together with methyl methacrylate as a monomer unit, in order to obtain an optical fiber having increased heat-resistance during end use.

Furthermore, coating of the core-cladding type optical fiber is preferred. As coating materials, polyethylene, polypropylene, ethylene-propylene copolymer, a blend of these polymers, polyolefin with organosilyl groups, ethylene-vinyl acetate copolymer, poly(vinyl chloride), poly(vinylidene fluoride), nylon resin, polyester resin, nylon elastomer, polyester elastomer, and polyurethane are preferred.

Coating of these polymers is preferably conducted below 240°C, so as to keep the light transmittance of the optical fiber high.

After spinning, core-cladding optical fibers may be placed in a row, and be adhered to each other at a temperature above the glass transition temperature of the copolymer for cladding, to form a sheet of optical fibers.

Thanks to the excellent chemical resistance of cladding material embodying the present invention, a resin solution with heat resistance, a resin with good adhesive properties, and a resin with colored dyes or fluorescent dyes may be coated onto the fiber.

The polymer of the present invention has improved thermal stability compared with fluoroalkyl methacrylate polymers known previously. Therefore, it is possible to produce without any difficulties an optical fiber having a large acceptance angle by use of the cladding material of the present invention.

Further, the optical fiber whose cladding is made from the cladding material of this invention has a good heat-resisting durability because of the low amount of monomer residue generated by thermal decomposition.

Moreover, the optical fiber using the cladding material of this invention can be used at higher temperature than the conventional optical fiber because the glass transition temperature of the cladding material is higher than that of conventional materials.

Thus, a cladding materials embodying the present invention may have great industrial significance and value for optical fibers.

The cladding material of this invention is useful for general plastic optical fibers, especially for plastic optical fibers with a large acceptance angle.

Embodiments of the present invention will now be described in more detail by way of the following Examples.

Some abbreviations used in Examples are shown below, together with their chemical structures.
(1) 3,3,4,4,5,5,6,6,7,7,8,8,9,9,10,10,10-heptadecafluorodecyl methacrylate: 17FM 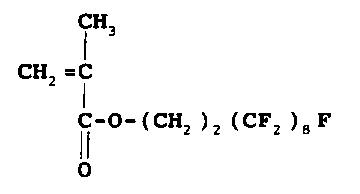
(2) 2,2,3,3,4,4,5,5-octafluoropentyl methacrylate: 8FM 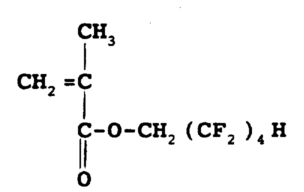
(3) 2,2,3,3-tetrafluoropropyl methacrylate: 4FM 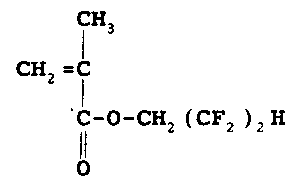
(4) N-cyclohexyl maleimide: CH-MID 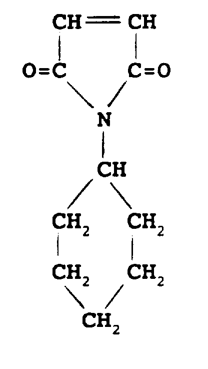
(5) N-isopropyl maleimide: iPr-MID 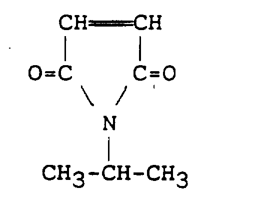
(6) methyl methacrylate: MMA 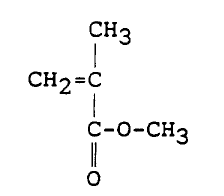
(7) N-(o-methyl)phenyl maleimide: (o-Me)Ph-MID 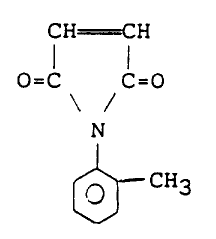
(8) 2,2,3,3,4,4,5,5-octafluoropentyl acrylate: 8FA

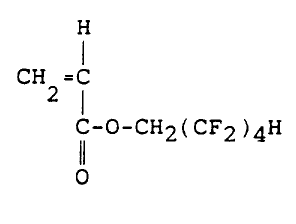

### Example 1

A mixture of

| | |
|---|---|
| 17-FM | 86.5 wt parts |
| CH-MID | 13.5 wt parts |
| azobisisobutyronitrile | 0.01 wt parts |
| n-butyl mercaptan | 0.005 wt parts |

was prepared after distilling each of the monomers, and the mixture was fed into a glass ampoule. The ampule was then degassed by three vacuum freeze thaw cycles, and sealed. After 8 hours of heating at 100°C, the ampoule was cooled and then opened. The obtained clear solid block of copolymer was cooled in liquid nitrogen and crushed into small pieces. The obtained copolymer was then dried in a vacuum oven at 115°C for 48 hours, to remove residual monomers.

The thermal stability of thus obtained copolymer was evaluated in terms of its viscosity retention, which was calculated by comparing the viscosity of the polymer after heat treatment at 240°C for 60 minutes with that of the copolymer after heat treatment at 240°C for 10 minutes.

The viscosity retention of the above obtained copolymer was 86%.

The above obtained copolymer has a refractive index of 1.395, which is much lower than that of conventional polymers for cladding.

Thus, the obtained copolymer has an excellent thermal stability and low refractive index, so that it was very useful for cladding material of an optical fiber with a large acceptance angle.

The above obtained copolymer was supplied as a cladding material, and a standard polymethyl methacrylate was supplied as a core material, to a composite spinning machine having a core-cladding type spinneret. A core-cladding type optical fiber was then spun at a spinning temperature of 240°C and was drawn 2.0 times at 160°C, to obtain, without difficulty, a core-cladding type optical fiber having a core radius of 980 µm and a cladding thickness of 10 µm.

The thermal stability of the optical fiber thus obtained was evaluated in terms of its light transmittance retention, which was measured by the following procedure: 10 m of the optical fiber was treated in oven at 80°C for 500 hours. By comparing the loss of light transmittance before and after the heat treatment, the light transmittance retention of the optical fiber was calculated.

The light transmittance retention of the above obtained optical fiber thus measured was 95%.

The flexibility of the optical fiber was evaluated by measuring how many times the optical fiber could be wound at an angle of 180° around a rod with a diameter of 5 mm under load of 700 g until its fracture.

The number of windings before fracture of the above obtained optical fiber was 1100.

Thus, an optical fiber having an excellent heat-resistance and yet retaining good light transmittance and mechanical characteristics was obtained without difficulty, by use of a cladding material according to this invention.

### Examples 2 - 4

Copolymers for cladding materials were obtained and optical fibers were then obtained in the same manner as described in Example 1, except that the monomer composition of the copolymers were changed as shown in Table 1.

The properties of obtained polymers for cladding and obtained optical fibers are shown in Table 1.

Thus, the obtained copolymers for cladding and obtained optical fibers both have the same excellent properties as those of Example 1.

### Example 5

A mixture of

| | |
|---|---|
| 8 FM | 57.6 wt parts |
| iPr-MID | 2.4 wt parts |
| 1,1,2,2-tetrachloro-1,2-difluoroethane | |
| | 40.0 wt parts |
| azobisisobutyronitrile | 0.01 wt parts |

was fed to a polymerization bath at a rate of 5 kg/hour while filtering the mixture through a Teflon filter with a pore diameter of 0.1 µm. The polymerization temperature was 80°C, and the liquid level was controlled so as to obtain an average dwelling time of 4 hours. The reacted polymer solution was discharged by a metering pump at a rate of 5 kg/hour. This solution was supplied to an extruder with a vent, and the unreacted monomers and solvent were removed at 190 - 250°C at 250 - 1 torr (33331-133 Pa). The solution was then introduced into a core-cladding type fiber spinning machine as a cladding material.

On the other hand, as a core material, methyl methacrylate/N-isopropyl maleimide copolymer (65/35 in weight) was prepared in the same way as described in US-A-4810055, and then supplied to the spinneret.

The properties of the polymer for cladding and optical fiber thus obtained are shown in Table 1.

### Comparative Example 1

A polymer for cladding was obtained in the same manner as Example 1, except that only 17FM was used as a monomer component. The viscosity of the polymer thus obtained after thermal treatment was extremely small and indeed was too small to be measured correctly; hence the absence of a value in Table 1.

Thus this polymer had very poor thermal stability, so that the fiber thus obtained was poor in light transmittance because of the thermal decomposition of the cladding material during the spinning and drawing processes. Moreover, the obtained fiber was very poor in thermal stability, this being because of the extremely poor thermal stability of the cladding component.

### Comparative Example 2

A copolymer for cladding was obtained and an optical fiber was then obtained in the same manner as that described in Example 1, except that 50 wt.% of 17FM and 50 wt.% of iPr-MID were used as monomer components.

The obtained copolymer was poor in transparency, and rather brittle. Moreover, the obtained optical fiber had low light transparency and inferior flexibility as shown in Table 1.

Therefore, this polymer was unsuitable for a cladding material of an optical fiber.

### Comparative Example 3

A copolymer for cladding was obtained and an optical fiber was then obtained in the same manner as that described in Example 1, except that 50 wt.% of 8FM, 30 wt.% of 4FM and 20 wt.% of MMA were employed as monomer components.

The thermal stability of the obtained polymer was not good and gas generation occurred during thermal treatment.

In addition, light transmittance retention and flexibility of the optical fiber were not good.

Therefore, this polymer was unsuitable for a cladding material of an optical fiber.

### Comparative Example 4

A copolymer for cladding was obtained and then an optical fiber was obtained in the same manner as that described in Example 1, except that 60 wt.% of 17FM, 5 wt.% of (o-Me)Ph-MID and 35 wt.% of MMA were employed as monomer components.

The copolymer thus obtained had a slightly yellow color, and its refractive index was relatively high, as shown in Table 1.

Moreover, light transmittance and flexibility of the optical fiber thus obtained was not satisfactory.

Therefore, this polymer was unsuitable for a cladding material of an optical fiber.

### Comparative Example 5

A copolymer for cladding was obtained and an optical fiber was then obtained in the same manner as that described in Example 1, except that 40 wt.% of 17FM, 40 wt.% of 8FA and 20 wt.% of MMA were employed as the monomer components.

The copolymer thus obtained had a rubber-like state at room temperature, this being because of its low glass transition temperature.

The light transmittance retention of the obtained optical fiber, whose cladding material was the polymer obtained above, was poor, again because of its low glass transition temperature.

Therefore, this polymer was unsuitable for a cladding material of an optical fiber.

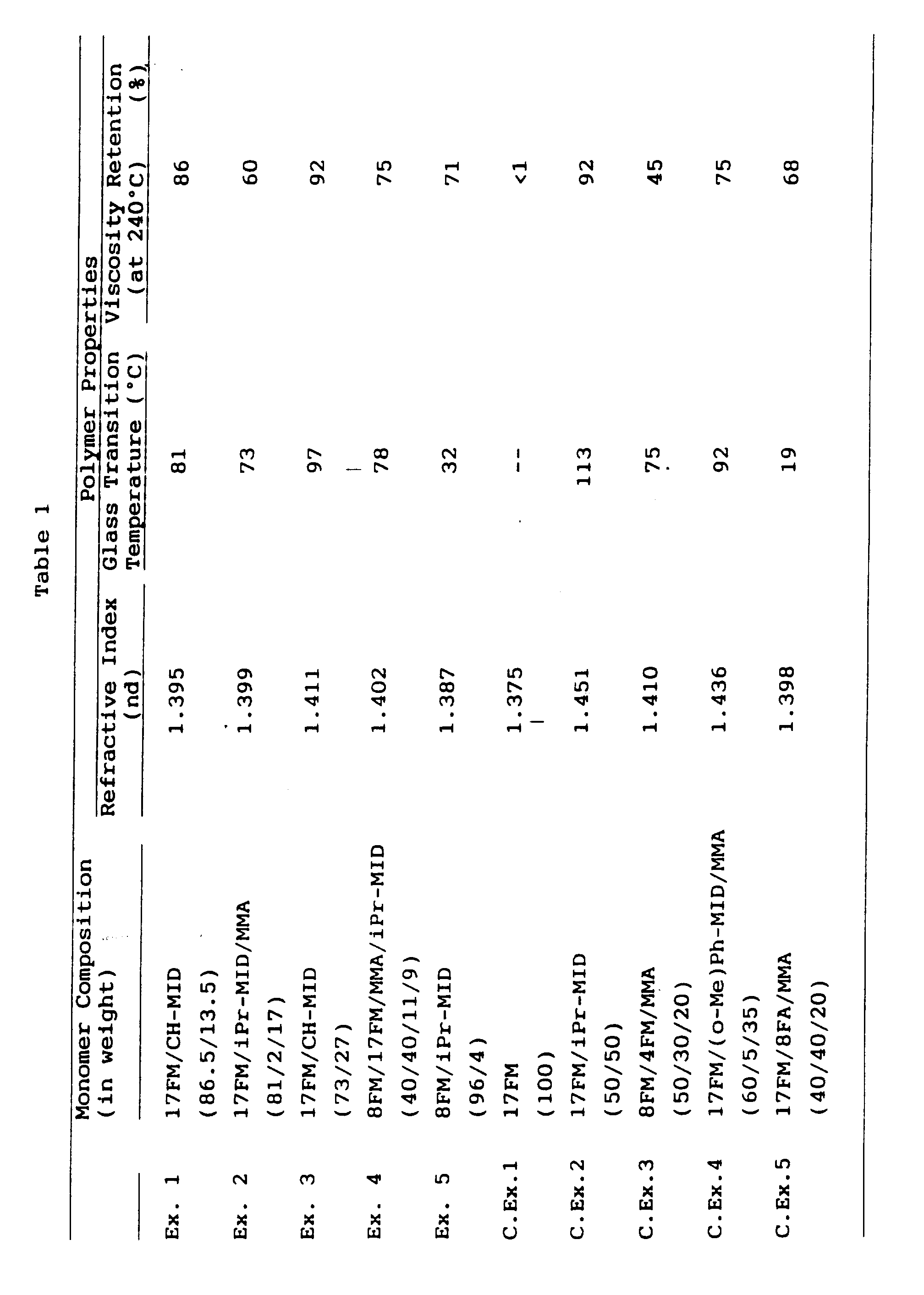

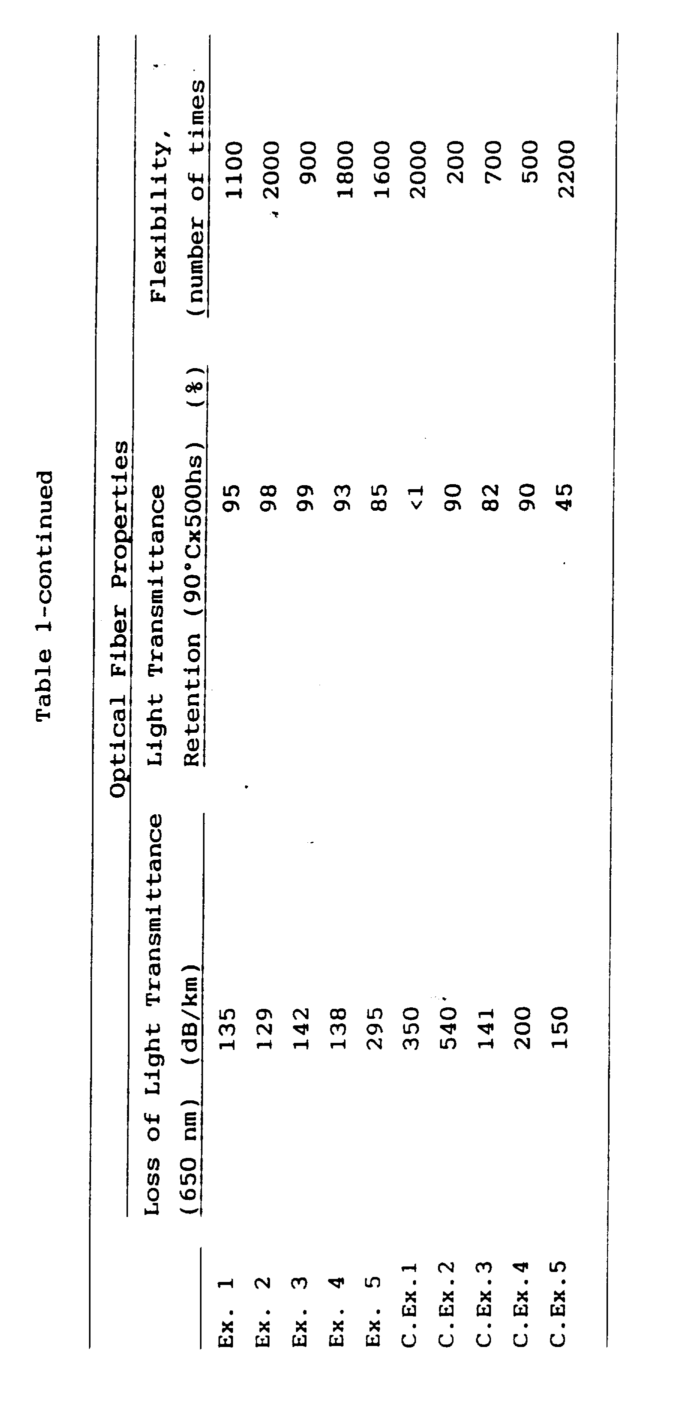

## Claims

1. A cladding material for optical fibers with a core-cladding structure, which material comprises a copolymer comprising from 70 to 99.8wt.% inclusive of a fluoroalkyl methacrylate having 8-21 fluorine atoms and from 30 to 0.2wt.% inclusive of an N-aliphatic maleimide as monomer units.

2. A cladding material according to claim 1, wherein said fluoroalkyl methacrylate is represented by the general formula 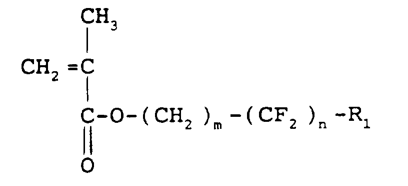 wherein R₁ is H or F; m is 1 or 2; n is from 4 to 10 inclusive.

3. A cladding material according to claim 2, wherein R₁ is F, m is 2_{,} n is 8.

4. A cladding material according to any preceding claim, wherein the aliphatic group of said N-aliphatic maleimide has 1 - 6 carbon atoms.

5. A cladding material according to claim 4, wherein said aliphatic group is at least one group selected from isopropyl, isobutyl, secondary-butyl, tertiary-butyl and 2,2-dimethylpropyl groups.

6. A cladding material according to claim 5, wherein said aliphatic group is an isopropyl group.

7. A cladding material according to any preceding claim, wherein said copolymer comprises 80 - 99 wt.% of the fluoroalkyl methacrylate and 20 - 1 wt.% of the N-aliphatic maleimide as monomer units.

8. A cladding material according to any one of claims 1 to 6, wherein said copolymer consists essentially of 70 - 89.8 wt.% of the fluoroalkyl methacrylate, 20 - 0.2 wt.% of the N-aliphatic maleimide and 10 - 29.8 wt.% of methyl methacrylate as monomer units.

9. A cladding material according to any preceding claim, wherein said copolymer contains a stabilizer and/or an antioxidant.

10. A method for producing a cladding material, wherein the copolymer used for said cladding material is obtained by the continuous steps of copolymerizing monomers comprisin from 70 to 99.8wt.% inclusive of a fluoroalkyl methacrylate having 8-21 fluorine atoms and from 30 to 0.2wt.% inclusive of an N-aliphatic maleimide in the presence of 10 - 40 wt.% of a solvent based on the total amount of the polymerization mixture; and evaporating volatile compounds consisting essentially of unreacted monomers and solvent from the produced polymer.

11. A method according to claim 10, wherein said solvent is a fluorine-containing compound.

12. A method according to claim 11, wherein said solvent is at least one compound selected from 1,1,2-trichloro-1,2,2-trifluoroethane, 1,1,2,2-tetrachloro-1,2-difluoroethane(trifluoromethyl)benzene and 1,3-bis(trifluoromethyl)benzene.

13. A method according to any one of claims 10 to 12, wherein said monomers consist essentially of 70-89.8 wt.% of the fluoroalkyl methacrylate, 20 - 0.2 wt.% of the N-aliphatic maleimide and 10 - 29.8 wt.% of a methyl methacrylate by weight of total monomers.

14. An optical fiber with a cladding component and a core component, wherein the cladding component comprises a copolymer according to any one of claims 1 to 9.

15. An optical fiber according to claim 14, wherein the core component comprises a polymer comprising methyl methacrylate as a monomer unit.

16. An optical fiber according to claim 15, wherein the core component comprises a copolymer consisting essentially of a methyl methacrylate and an N-aliphatic maleimide as monomer units.

## Patentansprüche

1. Ummantelungsmaterial für optische Fasern mit einer Kern-Mantel-Struktur, welches Material ein Copolymer aus 70-99,8 (Grenzwerte eingeschlossen) Gew.-% eines Fluoralkylmethacrylats, das 8-21 Fluoratome aufweist, und aus 30-0,2 (Grenzwerte eingeschlossen) Gew.-% eines N-aliphatischen Maleimids als Monomer-Einheiten umfaßt.

2. Ummantelungsmaterial nach Anspruch 1, worin das Fluoralkylmethacrylat durch die allgemeine Formel 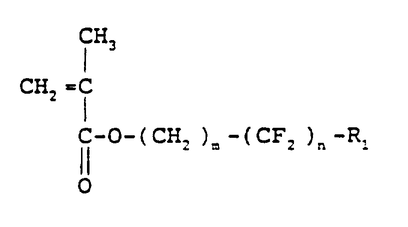 dargestellt ist, worin R₁ = H oder F ist; m = 1 oder 2 ist; n = 4-10 (Grenzwerte eingeschlossen) ist.

3. Ummantelungsmaterial nach Anspruch 2, worin R₁ = F, m = 2 und n = 8 ist.

4. Ummantelungsmaterial nach einem der vorhergehenden Ansprüche, worin die aliphatische Gruppe des N-aliphatischen Maleimids 1-6 C-Atome aufweist.

5. Ummantelungsmaterial nach Anspruch 4, worin die aliphatische Gruppe zumindest eine Gruppe ausgewählt aus Isopropyl-, Isobutyl-, sek-Butyl-, tert-Butyl- und 2,2-Dimethylpropyl-Gruppen ist.

6. Ummantelungsmaterial nach Anspruch 5, worin die aliphatische Gruppe eine Isopropyl-Gruppe ist.

7. Ummantelungsmaterial nach einem der vorhergehenden Ansprüche, worin das Copolymer 80-99 Gew.-% des Fluoralkylmethacrylats und 20-1 Gew.-% des N-aliphatischen Maleimids als Monomer-Einheiten umfaßt.

8. Ummantelungsmaterial nach einem der Ansprüche 1 bis 6, worin das Copolymer im wesentlichen aus 70-89,8 Gew.-% des Fluoralkylmethacrylats, 20-0,2 Gew.-% des N-aliphatischen Maleimids und 10-29,8 Gew.-% Methylmethacrylat als Monomer-Einheiten besteht.

9. Ummantelungsmaterial nach einem der vorhergehenden Ansprüche, worin das Copolymer einen Stabilisator und/oder ein Antioxidans enthält.

10. Verfahren zur Herstellung eines Ummantelungsmaterials, worin das für das Ummantelungsmaterial verwendete Copolymer nach den folgenden, kontinuierlichen Schritten erhalten wird: Copolymerisieren von Monomeren umfassend 70-99,8 (Grenzwerte eingeschlossen) Gew.-% eines Fluoralkylmethacrylats, das 8-21 Fluoratome aufweist, und 30-0,2 (Grenzwerte eingeschlossen) Gew.-% eines N-aliphatischen Maleimids in Gegenwart von 10-40 Gew.-%, bezogen auf die Gesamtmenge des Polymerisations-Gemischs eines Lösungsmittels, und Abdampfen von flüchtigen Verbindungen, die im wesentlichen aus nicht umgesetzten Monomeren und Lösungsmittel bestehen, aus dem gebildeten Polymer.

11. Verfahren nach Anspruch 10, worin das Lösungsmittel eine fluorhältige Verbindung ist.

12. Verfahren nach Anspruch 11, worin das Lösungsmittel zumindest eine Verbindung ausgewählt aus 1,1,2-Trichlor-1,2,2-trifluorethan, 1,1,2,2-Tetrachlor-1,2-difluorethan (trifluormethyl)benzol und 1,3-Bis(trifluormethyl)benzol ist.

13. Verfahren nach einem der Ansprüche 10 bis 12, worin die Monomere im wesentlichen aus 70-89,8 Gew.-% des Fluoralkylmethacrylats, 20-0,2 Gew.-% des N-aliphatischen Maleimids und 10-29,8 Gew.-% eines Methylmethacrylats bestehen, bezogen auf das Gesamtgewicht der Monomeren.

14. Optische Faser mit einer Mantelkomponente und einer Kernkomponente, worin die Mantelkomponente ein Copolymer nach einem der Ansprüche 1 bis 9 umfaßt.

15. Optische Faser nach Anspruch 14, worin die Kernkomponente ein Polymer mit Methylmethacrylat als Monomer-Einheit umfaßt.

16. Optische Faser nach Anspruch 15, worin die Kernkomponente ein Copolymer umfaßt, das im wesentlichen aus einem Methylmethacrylat und einem N-aliphatischen Maleimid als Monomer-Einheiten besteht.

## Revendications

1. Matériau de revêtement pour fibres optiques avec une structure coeur-revêtement, lequel matériau comprend un copolymère comprenant de 70 à 99,8% en poids inclus d'un fluoroalkyl méthacrylate ayant de 8 à 21 atomes de fluor et de 30 à 0,2% en poids inclus d'un maléimide N-aliphatique en tant qu'unités monomères.

2. Matériau de revêtement selon la revendication 1, dans lequel le fluoroalkyl méthacrylate est représenté par la formule générale 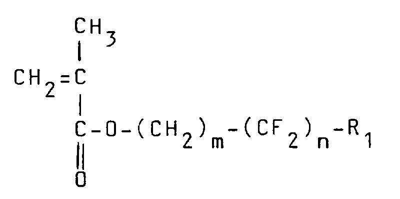 où R₁ est H ou F ; m vaut 1 ou 2 ; n vaut de 4 à 10 inclus.

3. Matériau de revêtement selon la revendication 2, dans lequel R₁ est F, m vaut 2, n vaut 8.

4. Matériau de revêtement selon l'une quelconque des revendications précédentes, dans lequel le groupe aliphatique dudit maléimide N-aliphatique a de 1 à 6 atomes de carbone.

5. Matériau de revêtement selon la revendication 4, dans lequel ledit groupe aliphatique est au moins un groupe choisi parmi des groupes isopropyle, isobutyle, butyle secondaire, butyle tertiaire, et 2,2-diméthylpropyle.

6. Matériau de revêtement selon la revendication 5, dans lequel ledit groupe aliphatique est un groupe isopropyle.

7. Matériau de revêtement selon l'une quelconque des revendications précédentes, dans lequel ledit copolymère comprend de 80 à 99% en poids du fluoroalkyl méthacrylate et de 20 à 1% en poids du maléimide N-aliphatique en tant qu'unités monomères.

8. Matériau de revêtement selon l'une quelconque des revendications 1 à 6, dans lequel ledit copolymère consiste essentiellement en 70 à 89,8% en poids du fluoroalkyl méthacrylate, en 20 à 0,2% en poids du maléimide N-aliphatique et en 10 à 29,8% en poids de méthyl méthacrylate en tant qu'unités monomères.

9. Matériau de revêtement selon l'une quelconque des revendications précédentes, dans lequel ledit copolymère contient un stabilisant et/ou un antioxydant.

10. Méthode pour produire un matériau de revêtement, dans laquelle le copolymère utilisé pour ledit matériau de revêtement est obtenu par les étapes continues de copolymérisation des monomères comprenant de 70 à 99,8% inclus d'un fluoroalkyl méthacrylate ayant 8 à 21 atomes de fluor et de 30 à 0,2% inclus d'un maléimide N-aliphatique en présence de 10 à 40% en poids d'un solvant sur la base de la quantité totale du mélange de polymérisation ; et l'évaporation des composés volatils consistant essentiellement en monomères n'ayant pas réagi et solvant provenant du polymère produit.

11. Méthode selon la revendication 10, dans laquelle ledit solvant est un composé contenant du fluor.

12. Méthode selon la revendication 11, dans laquelle ledit solvant est au moins un composé choisi parmi le 1,1,2-trichloro-1,2,2-trifluoroéthane, le 1,1,2,2-tétrachloro-1,2-difluoroéthane(trifluorométhyl)benzène et le 1,3-bis(trifluorométhyl)benzène.

13. Méthode selon l'une quelconque des revendications 10 à 12, dans laquelle lesdits monomères consistent essentiellement en 70 à 89,8% en poids de fluoroalkyl méthacrylate, de 20 à 0,2% en poids du maléimide N-aliphatique et de 10 à 29,8% en poids d'un méthyl méthacrylate, en poids des monomères totaux.

14. Fibre optique avec un composant de revêtement et un composant de coeur, dans laquelle le composant de revêtement comprend un copolymère selon l'une quelconque des revendications 1 à 9.

15. Fibre optique selon la revendication 14, dans laquelle le composant de coeur comprend un polymère comprenant du méthyl méthacrylate en tant qu'unité monomère.

16. Fibre optique selon la revendication 15, dans laquelle le composant de coeur comprend un copolymère consistant essentiellement en méthyl méthacrylate et en maléimide N-aliphatique en tant qu'unités monomères.
